# EUROPEAN PATENT SPECIFICATION

(11) **EP 4 068 036 B1**
(45) Date of publication and mention of the grant of the patent: **27.08.2025**
(21) Application number: 20891912.6
(22) Date of filing: 09.10.2020
(51) Int. Cl.: A01B 69/04, G05D 1/648, G05D 105/15, G05D 107/20, G05D 109/10

(54) **AUTONOMOUS TRAVELLING CONTROL SYSTEM**
STEUERUNGSSYSTEM FÜR AUTONOMES FAHREN
SYSTÈME DE COMMANDE DE DÉPLACEMENT AUTONOME

(30) Priority: 26.11.2019 JP 2019212796
(43) Date of publication of application: 05.10.2022
(73) Proprietor: Yanmar Power Technology Co., Ltd., Osaka-shi Osaka 530-0013 (JP)
(72) Inventor: NISHII, Yasuto, Osaka-shi, Osaka 530-8311 (JP)
(74) Representative: Novagraaf International SA
(86) International application number: PCT/JP2020/038362
(87) International publication number: WO 2021/106389

(56) References cited:
- EP-A1- 2 938 181
- EP-A1- 3 176 665
- EP-A1- 3 232 290
- WO-A1-2015/132928
- JP-A- 2012 120 449
- JP-A- 2012 120 449
- JP-A- 2016 031 649
- JP-A- 2016 114 984

## Description

### TECHNICAL FIELD

The present invention relates to an autonomous traveling control system for causing a work vehicle to travel along a route, and more particularly, to an auxiliary route created in a headland region.

### BACKGROUND ART

In a case where a work vehicle works in a field, the field is sometimes divided into a work region where the work vehicle mainly travels in a straight line to perform work, and a headland region around the work region, for example, the headland region for allowing the work vehicle to turn. Patent Literature 1 discloses a configuration of creating a route for allowing a work vehicle to autonomously travel in both this type of work region and a headland region. Patent Literature 2 relates to an application of setting a travel route based on position information obtained by a satellite positioning system. Patent Literature 3 relates to a work vehicle provided with a traveling machine and a working machine and configured to work while traveling. Patent Literature 4 relates to a work vehicle coordinating system for carrying out a work by an unmanned steerable sub work vehicle and a man-steered main work vehicle. Patent Literature 5 relates to methods for defining paths to be followed by an agricultural vehicle working a field.

### CITATION LIST

### Patent Literature

Patent Literature 1: Japanese Patent Application Laid-open No. 11-266608 ; Patent Literature 2: JP2012120449A ; Patent Literature 3: EP3232290A1 ; Patent Literature 4: EP3176665A1 ; Patent Literature 5: EP2938181A1.

### DISCLOSURE OF INVENTION

### PROBLEMS TO BE SOLVED BY THE INVENTION

However, the above Patent Literature 1 does not describe in detail a specific creation method or a specific use method for a route for a headland region. The headland region has a different characteristic from the work region, and therefore the method of creating or using a route in the work region cannot be simply applied.

The present invention has been made in view of the above circumstances, and an object of the present invention is to provide an autonomous traveling control system capable of simply and easily creating a headland traveling auxiliary route in a headland region.

### MEANS FOR SOLVING THE PROBLEMS

### EFFECT OF THE INVENTION

The problem to be solved by the present invention is as described above, and the means for solving this problem and an effect thereof will be described as follows.

According to an aspect of the present invention, there is provided an autonomous traveling control system having the following configurations. That is, the autonomous traveling control system is capable of creating a headland traveling field route for allowing a work vehicle to autonomous travel in a headland region formed between a work region for allowing the work vehicle to perform work while autonomously traveling, and a peripheral edge formed from a plurality of edges, in a field surrounded by the peripheral edge. The autonomous traveling control system selects a selective edge for creating the headland traveling auxiliary route from among a plurality of the edges on the basis of a distance between each of the edges and a vehicle position of the work vehicle, and an angle formed by each of the edges and a vehicle orientation of the work vehicle.

Consequently, it is possible to automatically select the edge in accordance with the position and the orientation of the work vehicle in the headland region, and automatically create the headland traveling auxiliary route for this selective edge. In addition, the selective edge is determined in consideration of the position and the orientation of the work vehicle in a complex manner, and therefore it is possible to determine the selective edge with the intention of an operator in various situations. Therefore, in the headland region, the work vehicle can easily travel autonomously at the edge where the operator wants to work with the work vehicle.

The above autonomous traveling control system is preferably configured as follows. That is, the autonomous traveling control system includes a field information storage unit, a positioning unit, an orientation detection unit, a determination distance calculation unit, a determination angle calculation unit, a headland traveling auxiliary route creation unit, an auxiliary route creation edge determination unit, and a traveling control unit. The field information storage unit stores field information related to the work region and the headland region set inside the field surrounded by the peripheral edge formed from a plurality of the edges. The positioning unit acquires a traveling position of the work vehicle as the vehicle position. The orientation detection unit acquires a traveling direction of the work vehicle as the vehicle orientation. The determination distance calculation unit calculates, as a determination distance, a distance between each of the edges and the vehicle position of the work vehicle. The determination angle calculation unit calculates, as a determination angle, an angle formed by each of the edges and the vehicle orientation. The headland traveling auxiliary route creation unit creates a plurality of the headland traveling auxiliary routes arranged side by side at every predetermined width in parallel to the selective edge selected from among a plurality of the edges. The auxiliary route creation edge determination unit automatically determines the selective edge for which the headland traveling auxiliary routes are created, by evaluating each of the determination distances calculated by the determination distance calculation unit, and each of the determination angles calculated by the determination angle calculation unit. The traveling control unit causes the work vehicle to autonomously travel along the headland traveling auxiliary routes.

Consequently, it is possible to automatically select the edge in accordance with the position and the orientation of the work vehicle in the headland region, and automatically create the headland traveling auxiliary route for this selective edge. In addition, the selective edge is determined in consideration of the position and the orientation of the work vehicle in a complex manner, and therefore it is possible to determine the selective edge with the intention of an operator in various situations. Therefore, in the headland region, the work vehicle can easily travel autonomously at the edge where the operator wants to work with the work vehicle.

The autonomous traveling control system is preferably configured as follows. That is, the autonomous traveling control system includes an autonomous traveling cancel unit that cancels the autonomous traveling of the work vehicle by the traveling control unit. In a case where the autonomous traveling of the work vehicle is canceled, the auxiliary route creation edge determination unit newly determines the selective edge on the basis of the determination distance by the vehicle position of the work vehicle and the determination angle by the vehicle orientation after the cancel of the autonomous traveling.

Consequently, determination of the selective edge suitable for the vehicle position and the vehicle orientation of the work vehicle (creation of the headland traveling auxiliary route) after the cancel of the autonomous traveling can be performed at an early timing.

The autonomous traveling control system preferably includes a display unit that displays the headland traveling auxiliary route and the vehicle position of the work vehicle.

Consequently, the operator can easily confirm the position relation between the created headland traveling auxiliary routes and the work vehicle. In addition, the headland traveling auxiliary routes for unnecessary edges are not displayed, and therefore the display screen can be made to be easily understood and more concise.

The autonomous traveling control system is preferably configured as follows. That is, this autonomous traveling control system includes an auxiliary route creation edge lock unit that fixes the selective edge. In a case where the auxiliary route creation edge lock unit fixes the selective edge, even when at least any of the determination distance by the vehicle position and the determination angle by the vehicle orientation is changed, the auxiliary route creation edge determination unit does not newly determine the selective edge.

Consequently, the operator can be prevented from being bothered by switching the headland traveling auxiliary route when, for example, the operator wants to first complete all the portions equivalent to one edge of the headland region.

### BRIEF DESCRIPTION OF DRAWINGS

FIG. 1 is a side view illustrating an overall configuration of a tractor used in an autonomous traveling control system according to an embodiment of the present invention.
FIG. 2 is a plan view of the tractor.
FIG. 3 is a block diagram illustrating a main configuration of the autonomous traveling control system.
FIG. 4 is a diagram illustrating a work region and a headland region in a field.
FIG. 5 is a diagram illustrating an example of a headland traveling auxiliary route.
FIG. 6 is a diagram illustrating an example of the headland traveling auxiliary route.
FIG. 7 is a diagram illustrating an example of the headland traveling auxiliary route.
FIG. 8 is a diagram illustrating an example of the headland traveling auxiliary route.
FIG. 9 is a diagram illustrating an example of a display screen.
FIG. 10 is a diagram illustrating an example of the display screen.
FIG. 11 is a diagram illustrating an example of the display screen.

### DESCRIPTION OF EMBODIMENTS

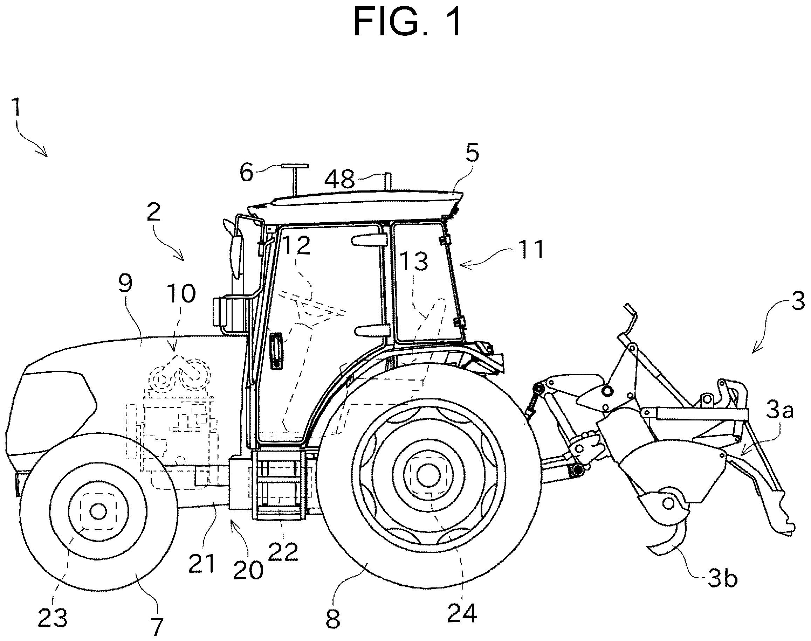

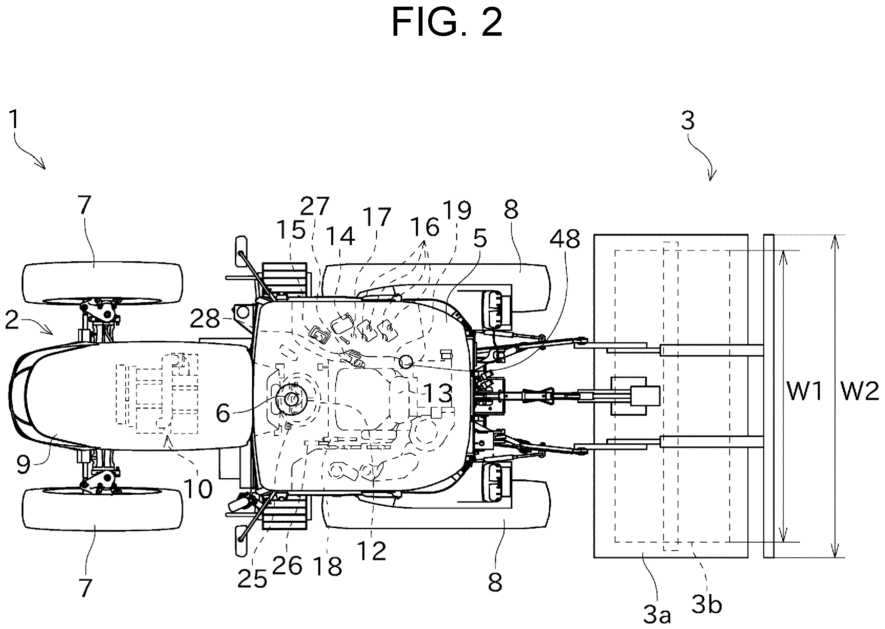

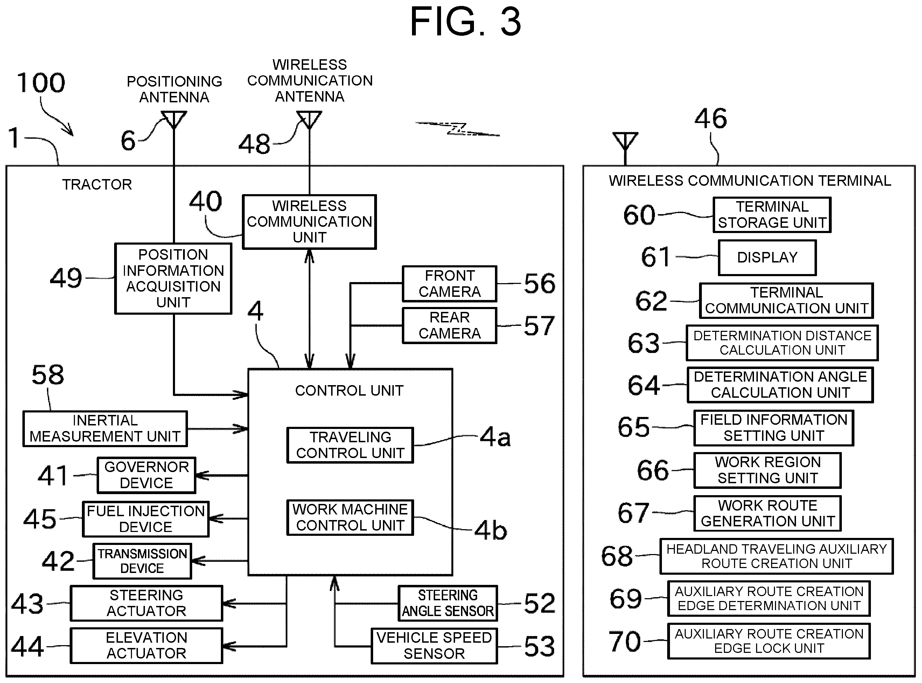

Now, an embodiment of the present invention will be described with reference to the drawings. FIG. 1 is a side view illustrating an overall configuration of a tractor 1 used in an autonomous traveling control system 100 according to an embodiment of the present invention. FIG. 2 is a plan view of the tractor 1. FIG. 3 is a block diagram of a main configuration of the autonomous traveling control system 100.

The autonomous traveling control system 100 is designed to causes a work vehicle to autonomously travel in a field to perform all or a part of work. In this embodiment, the tractor 1 will be described as an example of a work vehicle. In addition to the tractor 1, the examples of the work vehicle include a riding work machine such as a rice transplanter, a combine harvester, a civil engineering and construction work device, and a snowplow, and a walking work machine.

In this specification, autonomous traveling means that the tractor 1 travels autonomously along a predetermined route by control of a configuration related to traveling provided in the tractor 1 by a control unit (ECU) of the tractor 1, and autonomous work means that the tractor 1 autonomously performs work along a predetermined route by control of a configuration related to work provided in the tractor 1 by the control unit. The autonomous traveling and the autonomous work include a case where a person is on the tractor 1 and a case where no person is on the tractor. On the other hand, manual traveling and manual work mean that every configuration provided in the tractor 1 is operated by an operator, and traveling and work are performed.

The tractor 1 illustrated in FIG. 1 is used in the autonomous traveling control system 100 and is operated through wireless communication with a wireless communication terminal 46. The tractor 1 includes a travel machine body 2 capable of autonomously traveling in a field. The travel machine body 2 is detachably mounted with a work machine 3 for preforming farm work, for example.

Examples of this work machine 3 include various work machine such as a tiller, a plow, a fertilizer applicator, a mower, and a seeder. From among these, a desired work machine 3 can be selected and mounted on the travel machine body 2 as needed. The travel machine body 2 is configured such that the height and the attitude of the mounted work machine 3 is changeable.

FIG. 1 and FIG. 2 each illustrate an example in which a tiller is mounted as the work machine 3 on the travel machine body 2. Inside a cover 3a of the tiller, a tilling claw 3b is disposed, and the tilling claw 3b tills a field by rotating with the vehicle width direction as a center of rotation. Herein, the width at which the work machine 3 works (length in the vehicle width direction) is referred to as a work width W1, and the length in the vehicle width direction of the work machine 3 is referred to as a work machine width W2. In the tiller having a shape illustrated in FIG. 2, the width of the tilling claw 3b is equivalent to the work width W1, and the width of the cover 3a is equivalent to the work machine width W2. The tilling claw 3b is disposed inside the cover 3a of the tiller, and therefore the work width W1 < the work machine width W2 is satisfied. However, the present invention is not limited to this, and for example, in the case of a fertilizer applicator that spreads chemicals in the width direction, the work width W1 > the work machine width W2 may be sometimes satisfied.

Now, the configuration of the tractor 1 will be described in more detail with reference to FIG. 1 and FIG. 2. As illustrated in FIG. 1, the front of the travel machine body 2 of the tractor 1 is supported by a pair of right and left front wheels 7, 7 and the rear of the travel machine body 2 is supported by a pair of right and left rear wheels 8, 8.

In the front of the travel machine body 2, a hood 9 is disposed. In this hood 9, an engine 10 as a driving source for the tractor 1 and a fuel tank (not illustrated) are housed. The engine 10 can be constituted of a diesel engine, but the present invention is not limited to this. For example, the engine 10 may also be constituted of, for example, a gasoline engine. In addition to or instead of the engine, an electric motor may be used as a driving source.

Behind the hood 9, a cabin 11 for allowing an operator to get on is disposed. Inside this cabin 11, a steering handle 12 for allowing the operator to steer, a seat 13 on which the operator can sit, and various operating devices for various operations are mainly provided. However, a work vehicle such as the tractor 1 may be or may not be provided with the cabin 11.

Examples of the above operating device can include a monitor device 14, a throttle lever 15, a main gear shift lever 27, a plurality of hydraulic control levers 16, a PTO switch 17, a PTO gear shift lever 18, an auxiliary gear shift lever 19, a forward-reverse traveling switching lever 25, a parking brake 26, and a work machine elevation switch 28 illustrated in FIG. 2. These operating devices are disposed near the seat 13 or near the steering handle 12.

The monitor device 14 is configured to display various information on the tractor 1. The throttle lever 15 is an operating tool for setting the rotation speed of the engine 10. The main gear shift lever 27 is an operation tool for steplessly changing the traveling speed of the tractor 1. Each hydraulic control lever 16 is an operation tool for switching a hydraulic external take-off valve (not illustrated).
The PTO switch 17 is an operation tool for switching power transmission/shutdown to a PTO shaft (power take-off shaft) (not illustrated), which protrudes from a rear end of a transmission 22. In other words, when the PTO switch 17 is in an ON state, power is transmitted to the PTO shaft, the PTO shaft rotates, and the work machine 3 is driven. On the other hand, when the PTO switch 17 is in an OFF state, the power to the PTO shaft is cut off, the PTO shaft does not rotate, and the work machine 3 is stopped. The PTO gear shift lever 18 operates to change the power input to the work machine 3, and specifically is an operation tool for changing the rotation speed of the PTO shaft. The auxiliary gear shift lever 19 is an operation tool for switching the gear ratio of a traveling auxiliary gear mechanism in the transmission 22. The forward-reverse traveling switching lever 25 is configured to switch between a forward-traveling position, a neutral position, and a reverse-traveling position. When the forward-reverse traveling switching lever 25 is located at the forward-traveling position, the power of the engine 10 is transmitted to the rear wheels 8, so that the tractor 1 moves forward. When the forward-reverse traveling switching lever 25 is located at the neutral position, the tractor 1 moves neither forward nor rearward. When the forward-reverse traveling switching lever 25 is located at the reverse-traveling position, the power of the engine 10 is transmitted to the rear wheels 8, so that the tractor 1 moves backward. A parking brake 26 is an operation tool that is manually operated by the operator to generate braking force, and is used, for example, when the tractor 1 is stopped for a while. The work machine elevation switch 28 is an operation tool for raising and lowering the height of the work machine 3 mounted on the travel machine body 2 within a predetermined range.

As illustrated in FIG. 1, a chassis 20 of the tractor 1 is provided in a lower portion of the travel machine body 2. The chassis 20 is constituted of a machine body frame 21, the transmission 22, a front axle 23, a rear axle 24, and the like.

The machine body frame 21 is a support member in the front portion of the tractor 1 and supports the engine 10 directly or through a vibration-proof member or the like. The transmission 22 changes power from the engine 10 and transmits the changed power to the front axle 23 and the rear axle 24. The front axle 23 is configured to transmit the power input from the transmission 22 to the front wheels 7. The rear axle 24 is configured to transmit the power input from the transmission 22 to the rear wheels 8.

As illustrated in FIG. 3, the tractor 1 includes a control unit 4. The control unit 4 is constituted as a known computer and includes an arithmetic device such as a CPU, a storage device such as a non-volatile memory, and an input/output unit, which are not illustrated. In the storage device, various programs, data related to the control of the tractor 1, and the like are stored. The arithmetic device can read various programs from the storage device, and execute the various programs. By the cooperation of the above-described hardware and software, the control unit 4 can be operated as the traveling control unit 4a and the work machine control unit 4b. The traveling control unit 4a controls the traveling (forward movement, backward movement, stoppage, turning, and the like) of the travel machine body 2. The work machine control unit 4b controls movement (upward and downward movements, driving, stoppage, and the like) of the work machine 3. The control unit 4 can also perform control other than the above (e.g., analysis of a captured image). The control unit 4 may be constituted of a single computer or may be constituted of a plurality of computers.

The traveling control unit 4a performs vehicle speed control to control the speed of the tractor 1 and steering control to steer the tractor 1. In a case where the control unit 4 performs the vehicle speed control, the control unit 4 controls at least one of the rotation speed of the engine 10 and the gear ratio of the transmission 22.

Specifically, the engine 10 is provided with a governor device 41 including an actuator (not illustrated) that changes the rotation speed of the engine 10. The traveling control unit 4a is able to control the rotation speed of the engine 10 by controlling the governor device 41. On the engine 10, a fuel injection device 45 that adjusts the injection timing and the injection amount of fuel to be injected (fed) into a combustion chamber of the engine 10 is mounted. The traveling control unit 4a is able to stop the feed of the fuel to the engine 10 and stop the driving of the engine 10, by controlling the fuel injection device 45, for example.

In the transmission 22, for example, a transmission device 42 that is a movable swash plate-type hydraulic continuously variable transmission device is provided. The traveling control unit 4a changes the gear ratio of the transmission 22 by changing the angle of a swash plate of the transmission device 42 using an actuator (not illustrated). Such a process is performed, so that the vehicle speed of the tractor 1 is changed to a target vehicle speed.

In a case where the steering control is performed, the traveling control unit 4a controls the rotation angle of the steering handle 12. Specifically, a steering actuator 43 is provided at a middle portion of a rotation shaft (steering shaft) of the steering handle 12. With such a configuration, in a case where the tractor 1 travels along a predetermined route, the control unit 4 calculates an appropriate rotation angle of the steering handle 12 such that the tractor 1 travels along the route, and the control unit 4 drives the steering actuator 43 so as to achieve the obtained rotation angle, and controls the rotation angle of the steering handle 12.

The work machine control unit 4b controls the PTO switch 17 on the basis of whether or not a work conduct condition is met, so that driving and stop of the work machine 3 are switched. The work machine control unit 4b also controls the upward and downward movements of the work machine 3.

Specifically, the tractor 1 includes an elevation actuator 44 constituted of a hydraulic cylinder or the like and disposed in the vicinity of a three-point link mechanism coupling the work machine 3 to the travel machine body 2. The work machine control unit 4b drives the elevation actuator 44 to cause the work machine 3 to move upward or downward as appropriate, so that the work machine 3 can perform work at a desired height.

The tractor 1 including the control unit 4 as described above 1 can perform autonomous work while autonomously traveling in a field by control of each part (such as the travel machine body 2 and the work machine 3) of the tractor 1 by the control unit 4, even when the operator does not sit in the cabin 11 and does not perform various operation.

Now, a configuration for acquiring information required for the autonomous traveling will be described. Specifically, the tractor 1 of this embodiment includes a positioning antenna 6, a wireless communication antenna 48, a front camera 56, a rear camera 57, a vehicle speed sensor 53, a steering angle sensor 52, and the like, as illustrated in FIG. 3 and other figures. In addition to the above, the tractor 1 is includes an inertial measurement unit (IMU: orientation detection unit) 58 that can specify the attitude and the traveling direction (vehicle orientation) of the travel machine body 2 by calculating the roll angle, the pitch angle, and the yaw angle.

The positioning antenna 6 receives a signal from a positioning satellite constituting a positioning system such as a satellite positioning system (GNSS). As illustrated in FIG. 1, the positioning antenna 6 is mounted on an upper surface of a roof 5 of the cabin 11 of the tractor 1. A positioning signal received by the positioning antenna 6 is input to the position information acquisition unit (positioning unit) 49 illustrated in FIG. 3. The position information acquisition unit 49 calculates and acquires position information on the travel machine body 2 (strictly speaking, the positioning antenna 6) of the tractor 1 as latitude and longitude information, for example. The position information acquired by the position information acquisition unit 49 is input to the control unit 4 and used for autonomous traveling, determination of the selected edge described below, and the like.

While a high-accuracy satellite positioning system employing a GNSS-RTK method is used in this embodiment, the present invention is not limited to this, and any other positioning system may be used as long as position coordinates are obtained with high accuracy. For example, it is conceivable that a differential global positioning system (DGPS) or a satellite-based augmentation system (SBAS) is used.

The wireless communication antenna 48 receives a signal from the wireless communication terminal 46 operated by an operator, and transmits a signal to the wireless communication terminal 46. As illustrated in FIG. 1, the wireless communication antenna 48 is mounted on the upper surface of the roof 5 provided in the cabin 11 of the tractor 1. The signal from the wireless communication terminal 46 received by the wireless communication antenna 48 is signal-processed by the wireless communication unit 40 illustrated in FIG. 3 and then input to the control unit 4. The signal transmitted from the control unit 4 or the like to the wireless communication terminal 46 is signal-processed by the wireless communication unit 40, and then transmitted from the wireless communication antenna 48 and received by the wireless communication terminal 46.

The front camera 56 captures an image of the front of the tractor 1. The rear camera 57 captures an image of the rear of the tractor 1. The front camera 56 and the rear camera 57 are mounted on the roof 5 of the tractor 1. Video data captured by the front camera 56 and the rear camera 57 is transmitted from the wireless communication antenna 48 to the wireless communication terminal 46 by the wireless communication unit 40. The wireless communication terminal 46 that receives the video data displays the content on a display 61.

The above vehicle speed sensor 53 detects the vehicle speed of the tractor 1 and is provided on an axle between the front wheels 7 and 7, for example. Data of a detection result obtained by the vehicle speed sensor 53 is output to the control unit 4. The vehicle speed of the tractor 1 may not be detected by the vehicle speed sensor 53 but calculated on the basis of the traveling time as spent by the tractor 1 in a predetermined distance based on the positioning antenna 6.

The steering angle sensor 52 is a sensor for detecting the steering angle of the front wheels 7 and 7. In this embodiment, the steering angle sensor 52 is provided on a kingpin (not illustrated) that is provided on the front wheels 7 and 7. Data of a detection result obtained by the steering angle sensor 52 is output to the control unit 4. The steering angle sensor 52 may be provided on a steering shaft.

The wireless communication terminal 46 is constituted as a tablet-type personal computer, for example. The operator can refer to the information displayed on the display (display unit) 61 of the wireless communication terminal 46 for confirmation. The operator can also transmit, to the control unit 4 of the tractor 1, a control signal (such as an automatic travel start signal and an automatic travel stop signal) for controlling the tractor 1 by operating a touch panel (not illustrated) disposed so as to cover the display 61, and hardware keys (not illustrated) and the like disposed in the vicinity of the display 61.

The wireless communication terminal 46 is not limited to being configured as a tablet-type personal computer, but can also be configured as a node-type personal computer, a smartphone, or the like. In a case where the tractor 1 is allowed to travel autonomously with an operator on board, the tractor 1 side (e.g., the control unit 4) may have the same function as the wireless communication terminal 46.

In the following, a configuration of the wireless communication terminal 46 provided by the autonomous traveling control system 100 will be described in detail with reference to FIG. 3 and other figures.

As illustrated in FIG. 3, the wireless communication terminal 46 includes the display 61, a terminal communication unit 62, a determination distance calculation unit 63, a determination angle calculation unit 64, a field information setting unit 65, a work region setting unit 66, a work route generation unit 67, a headland traveling auxiliary route creation unit 68, an auxiliary route creation edge determination unit 69, and an auxiliary route creation edge lock unit 70.

The wireless communication terminal 46 includes an arithmetic device such as a CPU (not illustrated), a storage device such as a non-volatile memory, an input/output unit, and the like. The storage device stores various programs and data related to a travel route. The arithmetic device can read various programs from the storage device, and execute the various programs. The above storage device constitutes the terminal storage unit (field information storage unit) 60 of the wireless communication terminal 46.

By the cooperation of the above-described hardware and software, the wireless communication terminal 46 can be operated as the terminal communication unit 62, the determination distance calculation unit 63, the determination angle calculation unit 64, the field information setting unit 65, the work region setting unit 66, the work route generation unit 67, the headland traveling auxiliary route creation unit 68, the auxiliary route creation edge determination unit 69, and the auxiliary route creation edge lock unit 70.

The terminal communication unit 62 is used to communicate with the tractor 1 side. The wireless communication terminal 46 can receive and acquire information such as the traveling position (vehicle position) and the traveling direction (vehicle direction) of the tractor 1 from the tractor 1 via the terminal communication unit 62, and can also transmit the set field information (such as distribution of a working region and a headland region), a work route, a headland traveling auxiliary route, a control signal, and the like to the tractor 1 side.

In a case where a peripheral edge shape of the field is represented by a polygon, the determination distance calculation unit 63 calculates a distance between the tractor 1 and each edge of the polygon. This distance is used to determine a selective edge as described below, and therefore is hereinafter sometimes referred to as a determination distance D. The determination distance calculation unit 63 calculates the above determination distance D on the basis of the position information (vehicle position) of the tractor 1 received from the tractor 1 via the terminal communication unit 62. The determination distance D is calculated as many times as the number of edges. The determination distance D can be obtained by a known method of obtaining the length of a perpendicular line drawn from a point of the vehicle position on an edge. The point of the vehicle position is preferably located at the center in the width direction of the tractor 1 in order to simplify the calculation, but may deviate from the center in the width direction. As the point of the vehicle position, the position of the positioning antenna 6 can be adopted, but is not limited to this.

The determination angle calculation unit 64 calculates the angle between the traveling direction (vehicle direction) of the tractor 1 and each edge that constitutes the field peripheral edge. This angle is used to determine the selective edge as described below, and therefore the angle is hereinafter sometimes referred to as a determination angle θ. The determination angle calculation unit 64 calculates the above determination angle θ on the basis of the vehicle orientation of the tractor 1 received from the tractor 1 via the terminal communication unit 62. The determination angle θ is calculated as many times as the number of edges. The orientation of each edge is known in advance, and therefore the determination angle θ can be easily obtained. It can be considered that the determination angle θ is the magnitude of deviation of the vehicle orientation of the tractor 1 with respect to the edge orientation. The determination angle θ is always a value between 0° and 180° in this embodiment, but is not limited to this.

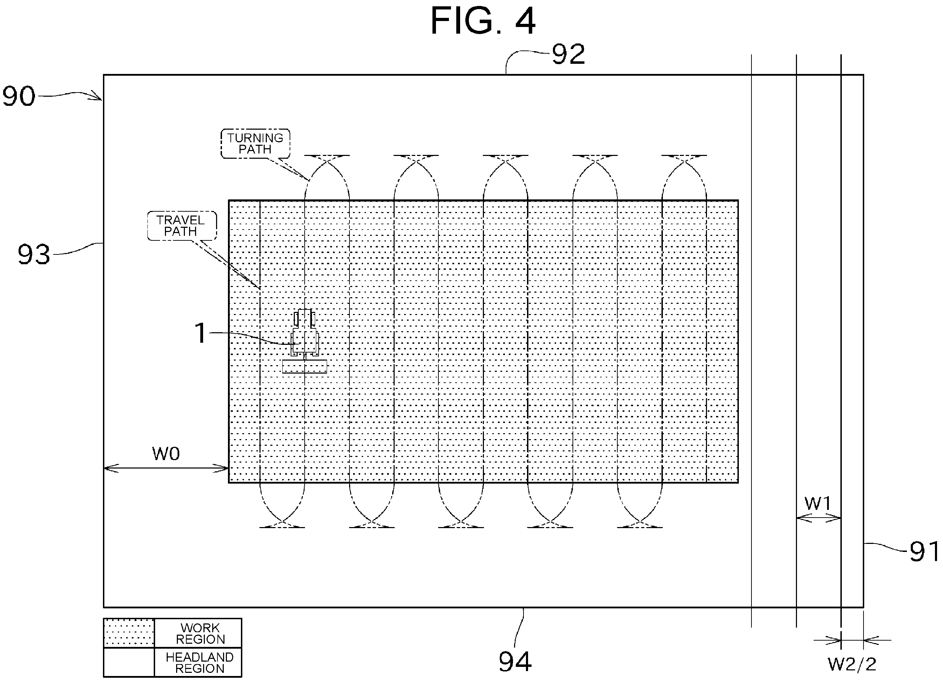

The field information setting unit 65 is used to set information related to a field 90 illustrated in FIG. 4 (hereinafter sometimes referred to as field information). For example, the operator operates the wireless communication terminal 46 with a map displayed on the display 61 to designate a plurality of points on the map, so that the information on the position and the shape of the field 90 can be also acquired on the basis of a polygon specified such that lines (edges) connecting the designated points do not intersect each other.

However, the present invention is not limited to this. For example, an operator can board the tractor 1 and drive the tractor so as to circle around once along the periphery of the field, and memorize the edges (peripheral edge) obtained by the transition of the position information of the positioning antenna 6 at that time, so that the information can be acquired automatically. The field information setting unit 65 sets, as the field 90, a portion surrounded by the peripheral edge formed from the plurality of edges acquired as described above.

The work region setting unit 66 sets a position of a work region where the tractor 1 performs autonomous work while traveling autonomously. Specifically, the operator sets the headland width (distance away from the field peripheral edge) WO and the like on an input screen displayed on the display 61. The work region setting unit 66 defines a headland region on the basis of the headland width WO input by the operation by the operator and the periphery shape (peripheral edge) of the field 90 set by the field information setting unit 65, and defines, as the work region, a region excluding the headland region from the region of the field 90.

The terminal storage unit 60 stores field information such as the position and the shape of the field set by the field information setting unit 65, work information such as a desired start position and a desired end position for autonomous traveling designated by operation of the wireless communication terminal 46 by the operator, and the work direction, and the work region and the headland region defined as described above.

The work route generation unit 67 generates a travel route for allowing the tractor 1 to autonomously travel in order that the tractor 1 performs autonomous work in the work region in the field. The work route generation unit 67 generates a travel route for causing the tractor 1 to travel autonomously when the tractor 1 performs autonomous work, on the basis of the work information such as the work width W1, the work machine width W2, the type of the work machine 3, the work start position, the work end position, and the work direction, and the work region set by the work region setting unit 66, which are input by the operation of the touch panel or the like by the operator. As illustrated in FIG. 4, the travel route alternately includes a straight travel path generated in the work region and a turning path for turning, the turning path being generated in the headland region. The travel path is not limited to a straight line, but may be formed into a zigzag line or the like, as needed.

The headland traveling auxiliary route creation unit 68 creates a headland traveling auxiliary route for allowing the tractor 1 to travel autonomously in order to perform autonomous work in the headland region in the field. The headland traveling auxiliary route creation unit 68 creates a headland traveling auxiliary route as illustrated in FIG. 4, on the basis of the work width W1, and the work machine width W2, an auxiliary route reference input by operation of the touch panel or the like by the operator, and the headland region and the like set by the work region setting unit 66. The headland traveling auxiliary route is formed in a straight line. In other words, the headland traveling auxiliary route covers straight traveling of the tractor 1 in the headland, and does not cover turning traveling. In the following description, this headland traveling auxiliary route is sometimes referred to simply as an auxiliary route.

The above auxiliary route reference is a reference for creating an auxiliary route, and a work region peripheral edge, or a field peripheral edge can be used. That is, the operator can designate either the work region peripheral edge or the field peripheral edge periphery as the auxiliary route reference by operating the touch panel or the like.

In a case where the field peripheral edge is designated as the auxiliary route reference, the headland traveling auxiliary route creation unit 68 offsets inward by a predetermined interval in accordance with an mounting position of the work machine 3, and creates an auxiliary route in parallel to the field peripheral edge, as illustrated in FIG. 4.

The above predetermined interval is preferably set to at least one half of the work machine width W2 in a case where the center in the width direction of the work machine 3 coincides with the center in the width direction of the tractor 1. On the other hand, in a case where the center in the width direction of the work machine 3 does not coincide with the center in the width direction of the tractor 1 (i.e., in a case where the work machine 3 is mounted on the tractor 1 in a state in which the center in the width direction of the travel machine body 2 is offset), the above predetermined interval is preferably set to be larger than one half of the work machine width W2 in consideration of the offset amount of the work machine 3.

The headland traveling auxiliary route creation unit 68 further creates other auxiliary route by further offsetting the created auxiliary route inward by the work width (predetermined width) W1. FIG. 4 illustrates an example in which auxiliary routes are created for one of the four edges of the field.

The headland traveling auxiliary route creation unit 68 preferably creates a first auxiliary route that is closest to a field peripheral edge which is the auxiliary route reference such that a distance from the field peripheral edge is at least one half of the work machine width W2.

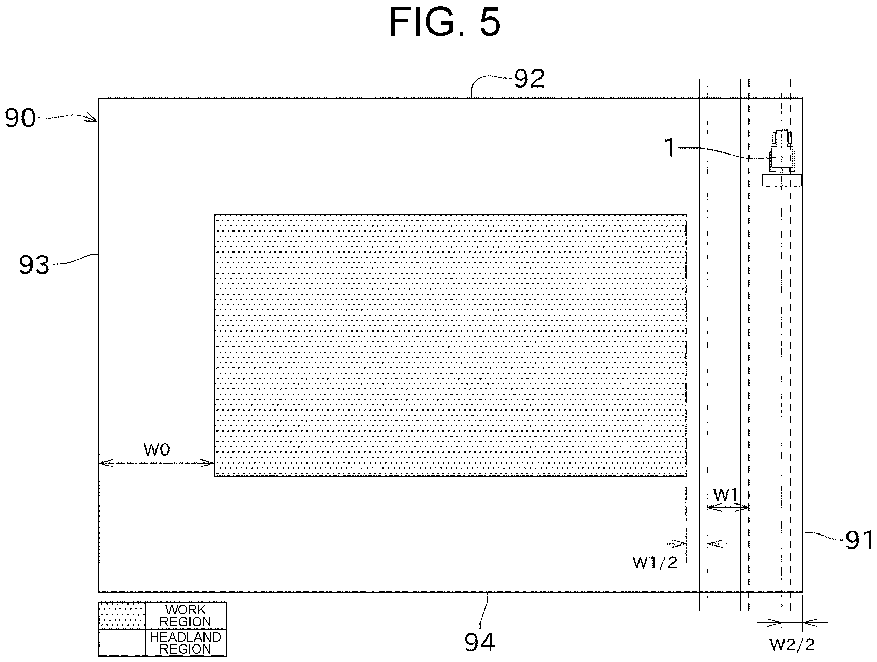

In a case where the work region peripheral edge is designated as the auxiliary route reference, the headland traveling auxiliary route creation unit 68 creates each of auxiliary routes in parallel to the work region peripheral edge by offsetting outward by at least one half of the work width W1 as illustrated by dotted lines in FIG. 5. The headland traveling auxiliary route creation unit 68 further creates another auxiliary route by further offsetting the created auxiliary route outward by at least one half of the work width W1. FIG. 5 illustrates an example in which creating auxiliary routes for one of the four edges of the field.

Specifically, for example, in a case where a distance between the auxiliary route closest to the field peripheral edge and the field peripheral edge is smaller than one half of the work machine width W2 as illustrated by the dotted lines in FIG. 5, there is a risk that the work machine 3 may contact a ridge of the peripheral edge. Therefore, in this case, the headland traveling auxiliary route creation unit 68 creates a new auxiliary route by shifting a plurality of created auxiliary routes to the work region side as illustrated by thin solid lines in FIG. 5, such that the distance becomes at least one half of the work machine width W2.

As described above, a plurality of auxiliary routes parallel to each other are created between the work region peripheral edge and the field peripheral edge by the headland traveling auxiliary route creation unit 68. The auxiliary routes created by the headland traveling auxiliary route creation unit 68 are superimposed on the field information such as the field shape, the headland region, and the work region, and are displayed by the display 61.

The auxiliary route creation edge determination unit 69 is used to determine which edge of the headland region is focus on to create the auxiliary route. As described above, a plurality of the auxiliary routes are generated along the periphery edge of the field for each one of the edges of the field. In theory, auxiliary routes can be created for all edges of the field, but in this embodiment, auxiliary routes for two or more edges are not created at the same time, and the headland traveling auxiliary route creation unit 68 creates auxiliary routes for selected one edge (hereinafter referred to as the selective edge). The auxiliary route creation edge determination unit 69 determines which edge is selected from among a plurality of the edges of the field to create the auxiliary routes. The determination of the selective edge is performed on the basis of the aforementioned determination distances D and determination angles θ (and thus the vehicle position and the vehicle orientation of the tractor 1). The details of this determination method will be described below.

The auxiliary route creation edge lock unit 70 can fix the selective edge for which the headland traveling auxiliary route creation unit 68 creates the auxiliary routes. The fixing of the selective edge is indicated by operation of the touch panel or other device by the operator. The details of this lock will be described later.

In the autonomous traveling control system 100 of this embodiment, after completion of the work in the work region, the wireless communication terminal 46 displays a screen to allow the operator to select, for example, any of "Work in Headland Region" and "Work End", and receives the selection of the operator. In a case where the operator wishes to work in the headland region from now, "Work in Headland Region" is selected. On the other hand, in a case where the operator wishes to work in the headland region later, or in a case where itself the work in the headland region is unnecessary, the operator selects "Work End".

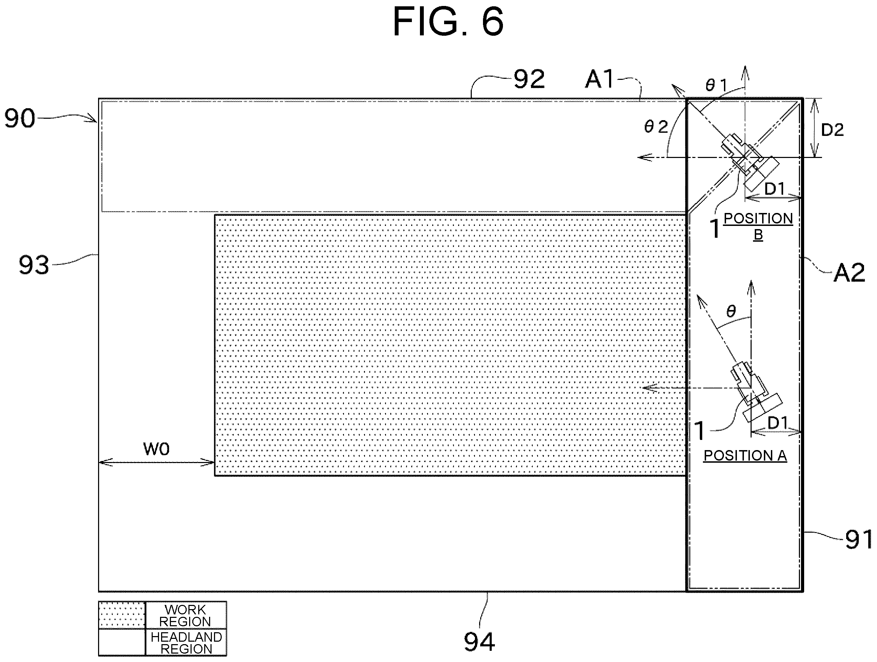

Next, in the autonomous traveling control system 100 of this embodiment, in a case where the tractor 1 travels in the headland region to perform work, creation and display of headland traveling auxiliary routes in the headland region will be described in detail with reference to FIG. 6 to FIG. 11 In the following, the field 90 having a rectangular peripheral edge composed of four edges 91, 92, 93 and 94 as illustrated in FIG. 6 and the like will be described as an example.

When the operator operates the wireless communication terminal 46 to select the above "Work in Headland Region", the determination distance calculation unit 63 acquires the position information of the tractor 1 via the terminal communication unit 62. The determination angle calculation unit 64 acquires the orientation information of the tractor 1 via the terminal communication unit 62. In the tractor 1, the position information can be obtained by the position information acquisition unit 49, and the orientation information can be obtained by the inertial measurement unit 58.

The determination distance calculation unit 63 calculates the determination distance D between the tractor 1 and each of the edges 91, 92, 93 and 94 that constitute the peripheral edge of the field 90 on the basis of the current position of the tractor 1 and the position information of each of the edges 91, 92, 93, and 94 that constitute the periphery of the field 90.

The determination angle calculation unit 64 calculates the angle formed by the vehicle orientation of the tractor 1 and each of the edges 91, 92, 93 and 94 of the field 90 on the basis of the orientation information of the tractor 1 and the orientation of each of the edges 91, 92, 93 and 94 in the map. In this example, the two opposite edges are parallel, and therefore the determination angle calculation unit 64 may calculate the angle to one of these two edges (edges 91 and 93 or the edge 92 and 94) as the determination angle θ.

In a case where the tractor 1 is located at a position A in FIG. 6, the determination distance D and the determination angle θ in relation to the edge 91 can be illustrated as in FIG. 6.

The auxiliary route creation edge determination unit 69 determines the selective edge for which the auxiliary route to be created by the headland traveling auxiliary route creation unit 68, by comprehensively evaluating the determination distances D calculated by the determination distance calculation unit 63 and the determination angles θ calculated by the determination angle calculation unit 64.

Specifically, in determining the selective edge, the auxiliary route creation edge determination unit 69 uses an evaluation function R (D, θ) for comprehensively evaluating the determination distance D and the determination angle θ. The auxiliary route creation edge determination unit 69 determines, as the selective edge, a portion of the headland region corresponding to the edge where R (D, θ) is minimized.

The way to define the evaluation function R is arbitrary. For example, the evaluation function R can be a function obtained by adding the value of θ (unit: °) and the value of D (unit: meter) with appropriate weighting. The value of the evaluation function R is obtained for each of the edges 91, 92, 93 and 94. In the example illustrated at the position Ain FIG. 6, among the four edges 91, 92, 93 and 94, the vehicle orientation of the tractor 1 is closest to the edge 91 and the edge 93, and the vehicle position of the tractor is closest to the edge 91. Therefore, the value of the evaluation function R for the edge 91 is the smallest. From this, the auxiliary route creation edge determination unit 69 determines the edge 91 as the selective edge.

Herein, in a case where the operator designates the work start position and the work direction of the work in the headland region by operating the touch panel or the like, the auxiliary route creation edge determination unit 69 may determines the selective edge for which the headland traveling auxiliary route creation unit 68 first creates the auxiliary route, on the basis of the work start position and the work direction instructed by the operator. That is, the determination distance calculation unit 63 calculates each of the determination distances D on the basis of the work start position designated by the operator. The determination angle calculation unit 64 calculates each of the determination angles θ on the basis of the work direction designated by the operator.

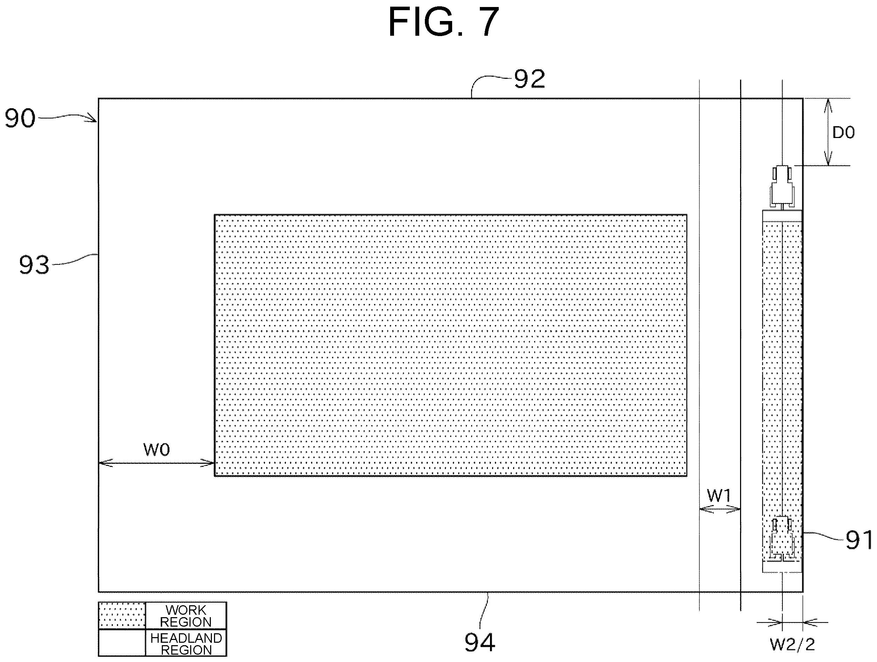

As illustrated in FIG. 7, the headland traveling auxiliary route creation unit 68 creates a plurality of auxiliary routes that are parallel to each other as described above, corresponding to the selective edge determined by the auxiliary route creation edge determination unit 69.

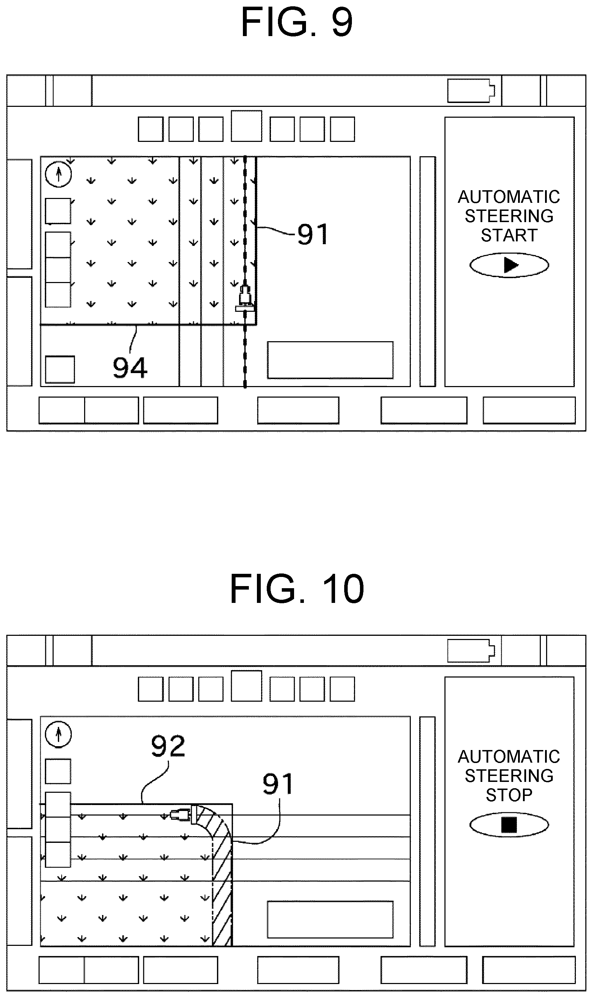

As illustrated in FIG. 9, the display 61 displays the auxiliary routes created by the headland traveling auxiliary route creation unit 68. A portion marked with grass patterns in FIG. 9 represents a portion of the field 90. The display of the portion of the field 90 on the display 61 can be enlarged or reduced according to the operation by the operator.

As described above, the auxiliary route is displayed only in the portion where the tractor 1 is traveling or will travel in the headland region. This limited display makes the display screen of the display 61 simple and even easier for the operator to check, as illustrated in FIG. 9.

The auxiliary route creation edge determination unit 69 determines the selective edge (in other words, which edge the auxiliary route is to be created for) by comprehensively evaluating the determination distances D and the determination angles θ. Therefore, by defining the evaluation function R (D, θ) appropriately, for example, also in a case where the tractor 1 is located near the position Ain FIG. 6 and the vehicle direction of the tractor 1 is changed significantly for some reason such as avoidance of an obstacle, and the vehicle orientation is the orientation along the edges 92 and 94, the auxiliary route corresponding to the edge 91 can be displayed. This combined evaluation prevents the auxiliary routes of the edge 92 or the edge 94 from being displayed even though the operator wants to work along the edge 91.

When it is confirmed that the vehicle position (or the instructed start position) of the tractor 1 substantially coincides with any of the auxiliary routes created by the headland traveling auxiliary route creation unit 68 and that the tractor 1 can travel along the auxiliary route, the auxiliary route is highlighted on the display 61. FIG. 9 illustrates an example where the auxiliary route is highlighted using a thick dotted line. The present invention is no limited to highlighting with the thick dotted line. For example, the auxiliary route may be displayed in different colors, or a message may be displayed near the auxiliary route (or a mark indicating the tractor 1).

In a case where it is confirmed that the tractor 1 can travel along the auxiliary route displayed on the display 61, the operator can, for example, touch an "Automatic Steering Start" button on the right side of the display screen illustrated in Fig. 9, thereby causing the tractor 1 to start autonomous traveling. On the tractor 1 side, in a case where a control command to start autonomous traveling is received from the wireless communication terminal 46 via the wireless communication unit 40, the traveling control unit 4a controls a structure related to traveling to cause the tractor 1 to travel autonomously, and the work machine control unit 4b controls a structure related to work to cause the tractor 1 to autonomously work. As a result, as illustrated in FIG. 7, the tractor 1 performs work on the headland region while traveling autonomously along the auxiliary routes created by the headland traveling auxiliary route creation unit 68.

In the autonomous traveling control system 100 of this embodiment, turning of the tractor 1 in the headland region is performed by operating the steering handle 12 by the operator. The autonomous traveling control system 100 of this embodiment is configured to notify the operator shortly before the timing when turning is required.

Specifically, as illustrated in FIG. 7, a distance D0 between the tractor 1 and the edge 92 of the field 90 in front of the tractor 1 in the traveling direction is monitored. In a case where this distance D0 becomes a predetermined threshold or less, the tractor 1 or the wireless communication terminal 46 informs the operator, for example, by sounding a buzzer or the like.

A case where the tractor 1 is turned by being steered at a position indicated by a position B in FIG. 6 by the operator in order to work along the edge 92 after working along the edge 91 is considered. In this situation as well, the auxiliary route creation edge determination unit 69 determines the selective edge by comprehensively evaluating the determination distance D for each edge and the determination angle θ for each edge.

Referring to FIG. 6, in the region of A1 where the determination distance D1 for the edge 91 is larger than a determination distance D2 for the edge 92, even in a case where the determination angle θ1 for edge 91 is smaller than the determination angle θ2 for edge 92, the edge 92 is determined as the selective edge.

In a region of A2 where the determination distance D1 for the edge 91 is smaller than the determination distance D2 for the edge 92, in a case where the determination angle θ1 for edge 91 is larger than the determination angle θ2 for edge 92, the edge 92 is determined as the selective edge.

The auxiliary route is used as a reference to align the vehicle position of the tractor 1 during autonomous traveling. Therefore, in headland work, it is generally desirable that in a case where work along the edge 92 will be performed immediately after work along the edge 91, the auxiliary route for edge 92 is displayed early on the display 61. The evaluation function R (D, θ) is defined such that the selective edge is determined as described above, so that the display of the auxiliary route for the edge 92 can be prevented from being delayed. As a result, it is easy to manually turn the tractor 1 so as to quickly adjust the vehicle position to the auxiliary route for the edge 92, and switch to autonomous traveling.

The autonomous traveling control system 100 of this embodiment can operate in an early display mode. The early display mode is a mode in which the auxiliary route in the headland region is displayed even earlier than the above in a case where the edge to be worked in the headland region is switched. The early display mode can be turned on and off by operation of the touch panel or other device by the operator. In a case where the early display mode is turned on, in the above example, when the determination angle θ1 for the edge 91 of the tractor 1 working along the edge 91 becomes a predetermined angle or more, the edge 92 is determined as the selective edge even in the region of A2 where the determination distance D1 for the edge 91 is less than the determination distance D2 for the edge 92. This predetermined angle is set to less than half the angle formed by the edge 91 and the edge 92, for example, 30°. Consequently, the display of the auxiliary route is anticipatorily switched simply by turning the tractor 1 by the predetermined angle or more, and therefore it is possible to smoothly change the edge to be worked by tractor 1.

In the early display mode, only in a case where a difference between the determination distance D1 for the edge 91 currently being worked and the determination distance D2 for the edge 92 adjacent to the edge 91 is within a predetermined range, the selective edge may be changed with emphasis on the determination angle θ, as described above. In this case, for example, the display of the auxiliary route can be prevented from switching when the tractor 1 turns slightly near the center of the edge 91. Only in a case where the vehicle position of the tractor 1 is in the vicinity of a vertex where the edge 91 and the edge 92 connect, the selective edge with the emphasis on the determination angle θ may be changed.

As described above, only the auxiliary route created for the selective edge determined by the auxiliary route creation edge determination unit 69 is displayed on the display 61. Therefore, as illustrated in FIG. 10 and other figures, in a case where a headland region portion corresponding to the edge 92 is displayed by the turning of the tractor 1, the display of the auxiliary route created for the headland region portion corresponding to the edge 91 disappears almost at the same time. Thus, it is possible to switch the creation and the display of the auxiliary route in accordance with the switching of the edge to be worked.

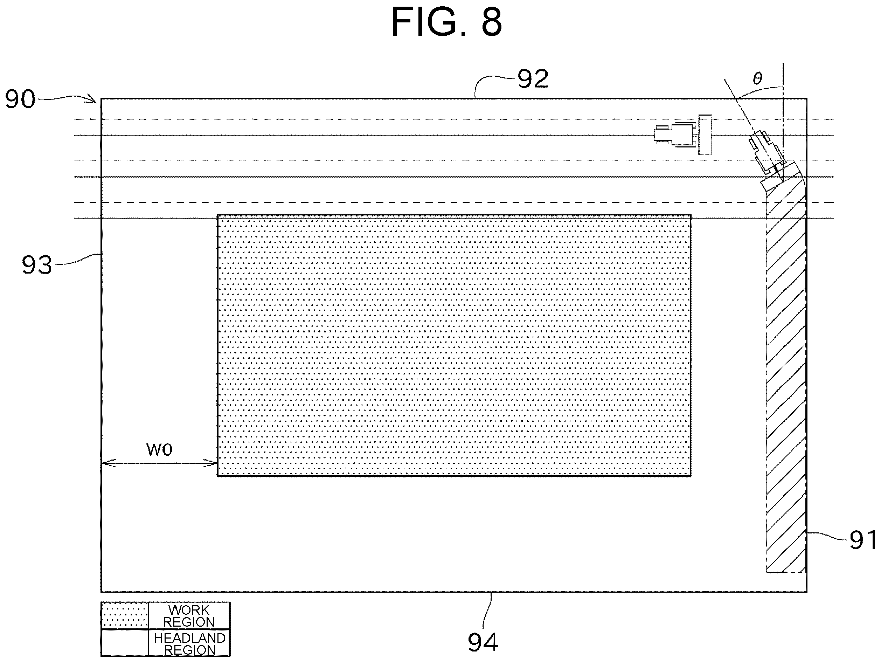

There is a possibility that the start position of the autonomous traveling of the tractor 1 deviates from the created auxiliary route for some reason, as illustrated in FIG. 8. In this case, in the autonomous traveling control system 100 of this embodiment, the headland traveling auxiliary route creation unit 68 creates a new auxiliary route by shifting the created auxiliary route on the basis of the vehicle position of the tractor 1 acquired from the tractor 1 via the terminal communication unit 62. Dotted lines in FIG. 8 illustrate auxiliary routes before shifting, and thin solid lines in FIG. 8 illustrate the auxiliary routes after shifting to match the vehicle position of the tractor 1.

In a case where the auxiliary route is shifted to match the vehicle position of the tractor 1 as described above, the headland traveling auxiliary route creation unit 68 stores this shift amount. When the tractor 1 circles the headland region and creates auxiliary routes again for the same selective edge, the auxiliary routes are shifted in the same way on the basis of the stored shift amount. Consequently, in a case where the tractor 1 circles the headland region and works, when shift is performed at the time of circling, the shift amount of the auxiliary routes for the same selective edge which is shifted can be held at the time of subsequent circling. As a result, it is possible to implement a beautiful finish.

The shift of the above auxiliary routes by the headland traveling auxiliary route creation unit 68 may be performed automatically or may be performed in accordance with the operation (e.g., a button for shift) by the operator.

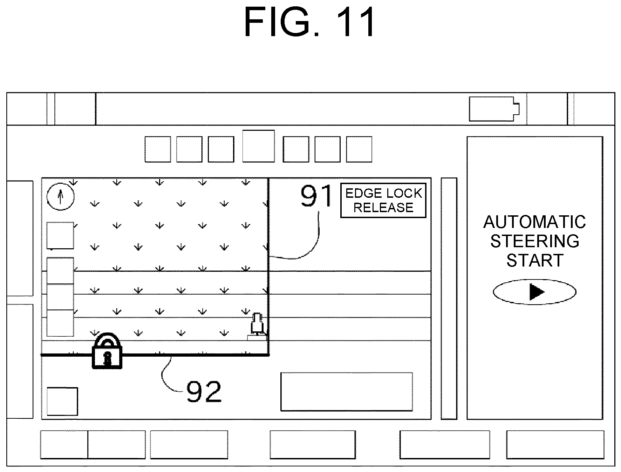

The autonomous traveling control system 100 of this embodiment has a lock function of locking a selective edge. In a case where the operator wants to work intensively on a specific one of the four edges, the operator touches the edge of the field 90 displayed on the display 61. This will enable the lock function. However, the present invention is not limited to this. For example, a button for locking a selective edge can be separately provided. When the lock function is enabled, as illustrated in FIG. 11, an instructed edge is displayed in a bold line or a lock mark or the like is displayed on the edge, so that the edge can be distinguished from other edges on the display 61.

The auxiliary route creation edge lock unit 70 fixes, as the selective edge, the edge designated by the operator. In this case, regardless of the vehicle position and the vehicle orientation of the tractor 1, the selective edge determined by the auxiliary route creation edge determination unit 69 is not changed from a headland region portion corresponding to the edge designated during the lock operation. In other words, an automatic switching function of the selective edge by the auxiliary route creation edge determination unit 69 is effectively prevented.

Therefore, as illustrated in FIG. 11, auxiliary routes displayed on the display 61 are only routes created for a portion corresponding to the edge designated by the operator. In some situations, the operator may want to work by traveling back and forth, while repeating straight ahead, turn, straight ahead, turn, ... for a plurality of the auxiliary routes displayed at the particular edge 92. In this case, the operator will not be bothered by the switching of the display of the auxiliary routes when the tractor 1 is turned.

The above lock function is canceled, for example, by touching the locked edge again, or by touching a separately provided cancel button. When the lock function is canceled, an automatic determination function of a selective edge by the auxiliary route creation edge determination unit 69 is enabled.

The automatic determination function of a selective edge by the auxiliary route creation edge determination unit 69 may be automatically prevented during autonomous traveling of the tractor 1. Consequently, it is possible to avoid switching of the display of the auxiliary routes even in a case where, for example, the orientation of the tractor 1 is changed for some reason during autonomous traveling along the auxiliary routes.

Specifically, for example, the operator touches the "Automatic Steering Start" button displayed on the display 61 to start the autonomous traveling of the tractor 1. As soon as the tractor 1 starts autonomous traveling, the automatic determination of the selective edge is prevented. When the autonomous traveling of the tractor 1 is canceled, the above blockage is canceled in conjunction with this. The auxiliary route creation edge determination unit 69 determines a new selective edge on the basis of the vehicle position and the vehicle orientation of the tractor 1 at the time when the autonomous traveling of the tractor 1 is canceled.

The autonomous traveling of the tractor 1 may be canceled, for example, by touching an "Automatic Steering Stop" button displayed on the display screen of the display 61 illustrated in Fig. 10 by the operator, or may be canceled automatically when the operator operates the steering handle 12 to steer the tractor by at least the predetermined steering angle. That is, the wireless communication terminal 46 and the steering handle 12 function as the autonomous traveling cancel unit of the autonomous traveling control system 100 of this embodiment.

Consequently, when the operator operates the steering handle 12 to turn the tractor 1 in the case illustrated at a position B in Fig. 6, or the like, the autonomous traveling of the tractor 1 is canceled, and the auxiliary route creation edge determination unit 69 determines a new selective edge. The vehicle position and the vehicle orientation of the tractor 1 changes every moment, and the selective edge is determined each time. When the tractor 1 turns by a certain degree or more, the selection edge switches from the edge 91 to the edge 92.

The auxiliary route created by the headland traveling auxiliary route creation unit 68 for the selective edge newly determined by the auxiliary route creation edge determination unit 69 is displayed on the display 61, and as illustrated in FIG. 9, the display to confirm that the auxiliary route enables traveling at the current position of the tractor 1 is displayed. In this state, the operator can touch the "Automatic Steering Start " button again to cause the tractor 1 to autonomously perform the work in the corresponding headland region portion.

As explained above, the autonomous traveling control system 100 of this embodiment includes the terminal storage unit 60, the position information acquisition unit 49, the inertial measurement unit 58, the determination distance calculation unit 63, the determination angle calculation unit 64, the headland traveling auxiliary route creation unit 68, the auxiliary route creation edge determination unit 69, and the traveling control unit 4a. The terminal storage unit 60 stores the field information on the work region for allowing the tractor 1 to perform work while traveling autonomously, and the headland region formed between the peripheral edge and the work region, set inside the field 90 surrounded by the peripheral edge formed from a plurality of the edges. The position information acquisition unit 49 acquires the traveling position and the vehicle position of the tractor 1. The inertial measurement unit 58 acquires the traveling direction of the tractor 1 as the vehicle orientation The determination distance calculation unit 63 calculates the distance between each edge and the vehicle position of the tractor 1 as the determination distance D. The determination angle calculation unit 64 calculates the angle formed by each edge and the vehicle orientation as the determination angle θ. The headland traveling auxiliary route creation unit 68 creates a plurality of the headland traveling auxiliary routes arranged side by side at every predetermined width in parallel to the selective edge selected from among a plurality of the edges. The auxiliary route creation edge determination unit 69 automatically determines the selective edge for which the headland traveling auxiliary route is created, by evaluating each of the determination distances D calculated by the determination distance calculation unit 63 and each of the determination angles θ calculated by the determination angle calculation unit 64. The traveling control unit 4a causes the tractor 1 to autonomously travel along the headland traveling auxiliary route.

Consequently, it is possible to automatically select the edge in accordance with the position and the orientation of the tractor 1 in the headland region, and automatically create the headland traveling auxiliary route for this selective edge. In addition, the selective edge is determined in consideration of the position and the orientation of the tractor 1 in a complex manner, and therefore it is possible to determine the selective edge with the intention of the operator in various situations. Therefore, in the headland region, the tractor can easily travel autonomously at the edge where the operator wants to work with the tractor.

The autonomous traveling control system 100 of this embodiment includes the steering handle 12 and the wireless communication terminal 46 as the autonomous traveling cancel unit. The autonomous traveling cancel unit cancel the autonomous traveling of the tractor 1 by the traveling control unit 4a. In a case where the autonomous traveling of the tractor 1 is canceled, the auxiliary route creation edge determination unit 69 determines a new selective edge on the basis of the determination distance D by the vehicle position of the tractor 1 and the determination angle θ by the vehicle orientation after the cancel of the autonomous traveling.

Consequently, determination of the selective edge suitable for the vehicle position and the vehicle orientation of the tractor 1 (creation of the headland traveling auxiliary route) after the cancel of the autonomous traveling can be performed at an early timing.

The autonomous traveling control system 100 of this embodiment includes the display 61. The display 61 displays the headland traveling auxiliary route and the vehicle position of the tractor 1.

Consequently, the operator can easily confirm the position relation between the created headland traveling auxiliary routes and the tractor 1. In addition, the headland traveling auxiliary routes for unnecessary edges are not displayed, and therefore the display screen can be made to be easily understood and more concise.

The autonomous traveling control system 100 of this embodiment includes the auxiliary route creation edge lock unit 70. The auxiliary route creation edge lock unit 70 fixes the selective edge. In a case where the auxiliary route creation edge lock unit 70 fixes the selective edge, even when at least any of the determination distance D by the vehicle position, and the determination angle θ by the vehicle orientation is changed, the auxiliary route creation edge determination unit 69 does not determine a new selective edge.

Consequently, the operator can be prevented from being bothered by switching the auxiliary route when, for example, the operator wants to first complete all the portions equivalent to one edge of the headland region.

While the preferred embodiments of the present invention are described above, the above configuration can be modified as follows.

The headland traveling auxiliary route creation unit 68 may first create auxiliary routes for an entire headland region to cause the terminal storage unit 60 to store the auxiliary routes. In this case, the display 61 displays only the auxiliary routes for a selective edge determined by the auxiliary route creation edge determination unit 69. However, as in the above embodiment, when the auxiliary routes are created every time the selective edge is switched, it is advantageous in that the auxiliary routes can be created with flexibility.

The auxiliary route may be created so as to extend outward from the headland region, or may be created so as to be inside the headland region.

In a case where the peripheral edge of the work region is used as the auxiliary route reference, one or more auxiliary routes may be additionally created outside the field, as the continuation of the dotted auxiliary route illustrated in FIG. 5 or the like. For example, in a field shaped like a rectangle with a corner missing, the shape of the real field may be wider than the shape of the field set by the field information setting unit 65. In this case, the auxiliary route additionally created by the headland traveling auxiliary route creation unit 68 is useful. In a case where the field peripheral edge is used as the auxiliary route reference, one or more auxiliary routes including a portion that passes through the work region may be additionally created as the continuation of the solid field route illustrated in FIG. 5 or the like.

The moving direction of the tractor 1 obtained from change in a GNSS positioning result can be treated as the vehicle orientation. In this case, the position information acquisition unit 49 is equivalent to an orientation detection unit.

The creation of auxiliary routes in the above embodiment can also be applied to a field with any shape other than a rectangle (e.g., a trapezoidal, or the like).

In accordance with the vehicle position of the tractor 1, the auxiliary route reference for creating the auxiliary route may be automatically determined. For example, in a case where the vehicle position is close to the peripheral edge of the work region, the headland traveling auxiliary route creation unit 68 recognizes the peripheral edge of the work region as the auxiliary route reference, and in a case where the vehicle position is close to the field periphery, the headland traveling auxiliary route creation unit 68 recognizes the field peripheral edge as the auxiliary route reference.

### DESCRIPTION OF REFERENCE NUMERALS

1 tractor (work vehicle)
4a traveling control unit
12 steering handle (autonomous traveling cancel unit)
49 position information acquisition unit (positioning unit)
46 wireless communication terminal (autonomous traveling cancel unit)
60 terminal storage unit (field information storage unit)
61 display (display unit)
63 determination distance calculation unit
64 determination angle calculation unit
68 headland traveling auxiliary route creation unit
69 auxiliary route creation edge determination unit
70 auxiliary route creation edge lock unit
100 autonomous traveling control system

## Claims

1. An autonomous traveling control system (100) capable of creating a headland traveling auxiliary route for allowing a work vehicle (1) to autonomous travel in a headland region formed between a work region for allowing the work vehicle (1) to perform work while autonomously traveling, and a peripheral edge formed from a plurality of edges, in a field (90) surrounded by the peripheral edge, **characterized in that**
the autonomous traveling control system is arranged to select a selective edge for creating the headland traveling auxiliary route from among a plurality of the edges on the basis of a distance between each of the edges and a vehicle position of the work vehicle (1), and an angle formed by each of the edges and a vehicle orientation of the work vehicle (1).

2. The autonomous traveling control system (100) according to claim 1, comprising:
a field information storage unit (60) that stores field information related to the work region and the headland region set inside the field (90) surrounded by the peripheral edge formed from a plurality of the edges;
a positioning unit (49) that acquires a traveling position of the work vehicle (1) as the vehicle position;
an orientation detection unit (58) that acquires a traveling direction of the work vehicle (1) as the vehicle orientation;
a determination distance calculation unit (63) that calculates, as a determination distance, a distance between each of the edges and the vehicle position of the work vehicle (1);
a determination angle calculation unit (64) that calculates, as a determination angle, an angle formed by each of the edges and the vehicle orientation;
a headland traveling auxiliary route creation unit (68) that creates a plurality of the headland traveling auxiliary routes arranged side by side at every predetermined width in parallel to the selective edge selected from among a plurality of the edges;
an auxiliary route creation edge determination unit (69) that automatically determines the selective edge for which the headland traveling auxiliary routes are created, by evaluating each of the determination distances calculated by the determination distance calculation unit (63), and each of the determination angles calculated by the determination angle calculation unit (64); and
a traveling control unit (4a) that causes the work vehicle (1) to autonomously travel along the headland traveling auxiliary routes.

3. The autonomous traveling control system (100) according to claim 2, comprising an autonomous traveling cancel unit that cancels the autonomous traveling of the work vehicle (1) by the traveling control unit (4a), wherein
in a case where the autonomous traveling of the work vehicle (1) is canceled, the auxiliary route creation edge determination unit (69) newly determines the selective edge on the basis of the determination distance by the vehicle position of the work vehicle (1) and the determination angle by the vehicle orientation after the cancel of the autonomous traveling.

4. The autonomous traveling control system (100) according to claim 1, comprising a display unit (61) that displays the headland traveling auxiliary route and the vehicle position of the work vehicle (1).

5. The autonomous traveling control system (100) according to claim 2, comprising an auxiliary route creation edge lock unit (70) that fixes the selective edge, wherein
in a case where the auxiliary route creation edge lock unit (70) fixes the selective edge, even when at least any of the determination distance by the vehicle position and the determination angle by the vehicle orientation is changed, the auxiliary route creation edge determination unit (69) does not newly determine the selective edge.

## Patentansprüche

1. Steuerungssystem (100) für autonomes Fahren, das in der Lage ist, eine Vorgewende-Nebenfahrtroute zu erzeugen, um es einem Arbeitsfahrzeug (1) zu erlauben, autonom in einer Vorgewenderegion, die zwischen einer Arbeitsregion, um es dem Arbeitsfahrzeug (1) zu erlauben, während des autonomen Fahrens Arbeit durchzuführen, und einem umlaufenden Rand gebildet ist, der aus einer Vielzahl von Rändern gebildet ist, auf einem Feld (90) zu fahren, das von dem umlaufenden Rand umgeben ist, **dadurch gekennzeichnet, dass**
das Steuerungssystem für autonomes Fahren eingerichtet ist, um einen selektiven Rand zum Erzeugen der Vorgewende-Nebenfahrtroute unter einer Vielzahl der Ränder basierend auf einem Abstand zwischen jedem der Ränder und einer Fahrzeugposition des Arbeitsfahrzeugs (1) und einen Winkel auszuwählen, der von jedem der Ränder und einer Fahrzeugausrichtung des Arbeitsfahrzeugs (1) gebildet ist.

2. Steuerungssystem (100) für autonomes Fahren nach Anspruch 1, umfassend:
eine Feldinformationsspeichereinheit (60), die Feldinformationen speichert, welche die Arbeitsregion und die Vorgewenderegion betreffen, die in dem Feld (90) eingestellt sind, das von dem umlaufenden Rand umgeben ist, der aus einer Vielzahl der Ränder gebildet ist;
eine Positionierungseinheit (49), die eine Fahrtposition des Arbeitsfahrzeugs (1) als die Fahrzeugposition erfasst;
eine Ausrichtungserkennungseinheit (58), die eine Fahrtrichtung des Arbeitsfahrzeugs (1) als die Fahrzeugausrichtung erfasst;
eine Bestimmungsabstandsberechnungseinheit (63), die als einen Bestimmungsabstand einen Abstand zwischen jedem der Ränder und der Fahrzeugposition des Arbeitsfahrzeugs (1) berechnet;
eine Bestimmungswinkel-Berechnungseinheit (64), die als einen Bestimmungswinkel einen Winkel berechnet, der von jedem der Ränder und der Fahrzeugausrichtung gebildet ist;
eine Vorgewende-Nebenfahrtrouten-Erzeugungseinheit (68), die eine Vielzahl der Vorgewende-Nebenfahrtrouten erzeugt, die nebeneinander an jeder vorbestimmten Breite parallel zu dem selektiven Rand angeordnet sind, der von einer Vielzahl der Ränder ausgewählt wurde;
eine Nebenroutenerzeugungsrandbestimmungseinheit (69), die den selektiven Rand, für den die Vorgewende-Nebenfahrtrouten erzeugt werden, mittels Bewertens jedes der Bestimmungsabstände, die von der Bestimmungsabstandsberechnungseinheit (63) berechnet werden, und jedes der Bestimmungswinkel bestimmt, die von der Bestimmungswinkel-Berechnungseinheit (64) berechnet werden; und
eine Fahrtsteuereinheit (4a), die das Arbeitsfahrzeug (1) veranlasst, autonom entlang der Vorgewende-Nebenfahrtrouten zu fahren.

3. Steuerungssystem (100) für autonomes Fahren nach Anspruch 2, das eine Autonomes-Fahren-Abbruchseinheit umfasst, die das autonome Fahren des Arbeitsfahrzeugs (1) durch die Fahrtsteuereinheit (4a) abbricht, wobei
in einem Fall, in dem das autonome Fahren des Arbeitsfahrzeugs (1) abgebrochen wird, die Nebenroutenerzeugungsrandbestimmungseinheit (69) den selektiven Rand nach dem Abbruch des autonomen Fahrens erneut basierend auf dem Bestimmungsabstand mittels der Fahrzeugposition des Arbeitsfahrzeugs (1) und dem Bestimmungswinkel mittels der Fahrzeugausrichtung bestimmt.

4. Steuerungssystem (100) für autonomes Fahren nach Anspruch 1, die eine Anzeigeeinheit (61) umfasst, welche die Vorgelege-Nebenfahrtroute und die Fahrzeugposition des Arbeitsfahrzeugs (1) anzeigt.

5. Steuerungssystem (100) für autonomes Fahren nach Anspruch 2, die eine Nebenfahrtroutenerzeugungsrand-Sperrungseinheit (70) umfasst, die den selektiven Rand festlegt, wobei
in einem Fall, in dem die Nebenfahrtroutenerzeugungsrand-Sperrungseinheit (70) den selektiven Rand festlegt, sogar wenn mindestens ein beliebiger von dem Bestimmungsabstand mittels der Fahrzeugposition und dem Bestimmungswinkel mittels der Fahrzeugausrichtung geändert wird, die Nebenroutenerzeugungsrandbestimmungseinheit (69) den selektiven Rand nicht erneut bestimmt.

## Revendications

1. Système de commande de déplacement autonome (100) pouvant créer un itinéraire auxiliaire de déplacement en fourrière pour permettre à un véhicule de travail (1) de se déplacer de manière autonome dans une région de fourrière formée entre une région de travail pour permettre au véhicule de travail (1) de réaliser le travail tout en se déplaçant de manière autonome, et un bord périphérique formé à partir d'une pluralité de bords, dans un champ (90) entouré par le bord périphérique, **caractérisé en ce que** :
le système de commande de déplacement autonome est agencé pour sélectionner un bord sélectif pour créer l'itinéraire auxiliaire de déplacement en fourrière parmi une pluralité de bords sur la base d'une distance entre chacun des bords et une position de véhicule du véhicule de travail (1) et un angle formé par chacun des bords et une orientation de véhicule du véhicule de travail (1).

2. Système de commande de déplacement autonome (100) selon la revendication 1, comprenant :
une unité de stockage d'information de champ (60) qui stocke les informations de champ liées à la région de travail et à la région de fourrière située à l'intérieur du champ (90) entouré par le bord périphérique formé à partir d'une pluralité de bords ;
une unité de positionnement (49) qui acquiert une position de déplacement du véhicule de travail (1) en tant que position de véhicule ;
une unité de détection d'orientation (58) qui acquiert une direction de déplacement du véhicule de travail (1) en tant qu'orientation de véhicule ;
une unité de calcul de distance de détermination (63) qui calcule, en tant que distance de détermination, une distance entre chacun des bords et la position de véhicule du véhicule de travail (1) ;
une unité de calcul d'angle de détermination (64) qui calcule, en tant qu'angle de détermination, un angle formé par chacun des bords et l'orientation de véhicule ;
une unité de création d'itinéraire auxiliaire de déplacement en fourrière (68) qui crée une pluralité d'itinéraires auxiliaires de déplacement en fourrière agencés côte à côte à chaque largeur prédéterminée en parallèle au bord sélectif sélectionné parmi une pluralité de bords ;
une unité de détermination de bord de création d'itinéraire auxiliaire (69) qui détermine automatiquement le bord sélectif pour lequel les itinéraires auxiliaires de déplacement en fourrière ont été créés, en évaluant chacune des distances de détermination calculées par l'unité de calcul de distance de détermination (63), et chacun des angles de détermination calculés par l'unité de calcul d'angle de détermination (64) ; et
une unité de commande de déplacement (4a) qui amène le véhicule de travail (1) à se déplacer de manière autonome le long des itinéraires auxiliaires de déplacement en fourrière.

3. Système de commande de déplacement autonome (100) selon la revendication 2, comprenant une unité d'annulation de déplacement autonome qui annule le déplacement autonome du véhicule de travail (1) par l'unité de commande de déplacement (4a), dans lequel :
dans un cas dans lequel le déplacement autonome du véhicule de travail (1) est annulé, l'unité de détermination de bord de création d'itinéraire auxiliaire (69) détermine à nouveau le bord sélectif sur la base de la distance de détermination par la position de véhicule du véhicule de travail (1) et l'angle de détermination par l'orientation de véhicule après l'annulation du déplacement autonome.

4. Système de commande de déplacement autonome (100) selon la revendication 1, comprenant une unité d'affichage (61) qui affiche l'itinéraire auxiliaire de déplacement en fourrière et la position de véhicule du véhicule de travail (1).

5. Système de commande de déplacement autonome (100) selon la revendication 2, comprenant une unité de verrouillage de bord de création d'itinéraire auxiliaire (70) qui fixe le bord sélectif, dans lequel :
dans un cas dans lequel l'unité de verrouillage de bord de création d'itinéraire auxiliaire (70) fixe le bord sélectif, même lorsque au moins l'un quelconque parmi la distance de détermination par la position de véhicule et l'angle de détermination par l'orientation de véhicule est modifié, l'unité de détermination de bord de création d'itinéraire auxiliaire (69) ne détermine pas à nouveau le bord sélectif.
